# EUROPEAN PATENT APPLICATION

(11) **EP 2 704 159 A1**
(43) Date of publication of application: **05.03.2014**
(21) Application number: 12776047.8
(22) Date of filing: 26.04.2012
(51) Int. Cl.: H01F 1/11, C01B 21/06, H01F 1/24, H01F 41/02

(54) **PROCESS FOR PRODUCING FERROMAGNETIC PARTICULATE POWDER, AND ANISOTROPIC MAGNET, BONDED MAGNET, AND COMPACTED MAGNET**

(30) Priority: 27.04.2011 JP 2011100177
(71) Applicant: Toda Kogyo Corporation, Otake-shi, Hiroshima 739-0652 (JP); Tohoku University, Sendai-shi, Miyagi 980-8577 (JP)
(72) Inventor: TAKAHASHI, Migaku, Sendai-shi, Miyagi 980-8577 (JP); OGAWA, Tomoyuki, Sendai-shi, Miyagi 980-8577 (JP); OGATA, Yasunobu, Sendai-shi, Miyagi 980-8577 (JP); KOBAYASHI, Naoya, Otake-shi, Hiroshima 739-0652 (JP); POLWATTA GALLAGE, Chammika Ruwan, Otake-shi, Hiroshima 739-0652 (JP); KOHARA, Kaori, Otake-shi, Hiroshima 739-0652 (JP)
(74) Representative: Raynor, Stuart Andrew
(86) International application number: PCT/JP2012/061176
(87) International publication number: WO 2012/147833

(57) **Abstract**

The present invention relates to ferromagnetic particles capable of exhibiting a high purity and excellent magnetic properties from the industrial viewpoints and a process for producing the ferromagnetic particles, and also provides an anisotropic magnet, a bonded magnet and a compacted magnet which are obtained by using the ferromagnetic particles. The ferromagnetic particles comprising an Fe₁₆N₂ compound phase in an amount of not less than 80% as measured by Mössbauer spectrum and each having an outer shell in which FeO is present in the form of a layer having a thickness of not more than 5 nm according to the present invention can be produced by subjecting aggregated particles of an iron compound as a starting material whose primary particles have a ratio of [(average deviation of major axis lengths of particles)/(average major axis length of particles)] of not more than 50%, U_{c} of not more than 1.55, C_{g} of not less than 0.95, C_{g}2 of not less than 0.40, an average major axis length of 40 to 5000 nm, and an aspect ratio (major axis diameter/minor axis diameter) of 1 to 200, to dispersing treatment; then subjecting the iron compound particles passed through a mesh screen to reducing treatment at a temperature of 160 to 420°C; and subjecting the resulting particles to nitridation treatment at a temperature of 130 to 170°C.

## Description

### TECHNICAL FIELD

The present invention relates to a process for producing ferromagnetic particles with a high purity comprising a core formed of Fe₁₆N₂ and an outer shell covering the core which is formed of a very thin oxide layer of FeO, and also provides an anisotropic magnet, a bonded magnet and a compacted magnet using the ferromagnetic particles.

### BACKGROUND ART

At present, as a magnet for motors requiring a power torque which are used in various applications including not only hybrid cars and electric cars but also familiar domestic appliances such as air conditioners and washing machines, there have been used Nd-Fe-B-based magnetic particles and a molded product thereof. However, the use of the Nd-Fe-B-based magnetic material as a magnet in these applications has almost reached a theoretical limitation.

In addition, supply of rare earth elements as the raw materials largely depends upon import from specific countries in view of low costs of the raw materials and a low content of isotope elements in the raw materials, i.e., there is present the large problem of so-called "elements risk". For this reason, Fe-N-based compounds such as Fe₁₆N₂ containing no rare earth elements have been noticed.

Among the Fe-N-based compounds, α" -Fe₁₆N₂ is known as a metastable compound that is crystallized when subjecting a martensite or a ferrite comprising nitrogen in the form of a solid solution therewith to annealing for a long period of time. The α"-Fe₁₆N₂ has a "bct" crystal structure, and therefore it is expected that the α"-Fe₁₆N₂ provides a giant magnetic substance having a large saturation magnetization. However, as understood from the name "metastable compound", there have been reported only very few successful cases where the compounds could be chemically synthesized in the form of isolated particles.

Hitherto, in order to obtain an α"-Fe₁₆N₂ single phase, various methods such as a vapor deposition method, an MBE method (molecular beam epitaxy method), an ion implantation method, a sputtering method and an ammonia nitridation method have been attempted. However, production of more stabilized γ' -Fe₄N or ε-Fe₂₋₃N is accompanied with an eutectic crystal of martensite (α'-Fe)-like metal or ferrite (α-Fe)-like metal, which tends to cause difficulty in producing the α"-Fe₁₆N₂ single phase compound in an isolated state. In some cases, it has been reported that the α"-Fe₁₆N₂ single phase compound is produced in the form of a thin layer. However, the a"-Fe₁₆N₂ single phase compound in the form of such a thin layer may be applied to magnetic materials only in a limited range, and tends to be unsuitable for use in still more extensive application fields.

The following known techniques concerning the α"-Fe₁₆N₂ have been proposed.

### CITATION LIST

### PATENT LITERATURES

Patent Document 1: Japanese Patent Application Laid-Open (KOKAI) No. 11-340023
Patent Document 2: Japanese Patent Application Laid-Open (KOKAI) No. 2000-277311
Patent Document 3: Japanese Patent Application Laid-Open (KOKAI) No. 2009-84115
Patent Document 4: Japanese Patent Application Laid-Open (KOKAI) No. 2008-108943
Patent Document 5: Japanese Patent Application Laid-Open (KOKAI) No. 2008-103510
Patent Document 6: Japanese Patent Application Laid-Open (KOKAI) No. 2007-335592
Patent Document 7: Japanese Patent Application Laid-Open (KOKAI) No. 2007-258427
Patent Document 8: Japanese Patent Application Laid-Open (KOKAI) No. 2007-134614
Patent Document 9: Japanese Patent Application Laid-Open (KOKAI) No. 2007-36027
Patent Document 10: Japanese Patent Application Laid-Open (KOKAI) No. 2009-249682

### NON-PATENT LITERATURES

Non-Patent Document 1: M. Takahashi, H. Shoji, H. Takahashi, H. Nashi, T. Wakiyama, M. Doi and M. Matsui, "J. Appl. Phys.", Vol. 76, pp. 6642-6647, 1994.

Non-Patent Document 2: Y. Takahashi, M. Katou, H. Shoji and M. Takahashi, "J. Magn. Magn. Mater.", Vol. 232, pp. 18-26, 2001.

### SUMMARY OF THE INVENTION

### PROBLEM TO BE SOLVED BY THE INVENTION

However, the techniques described in the above Patent Documents 1 to 11 and Non-Patent Documents 1 and 2 have still failed to improve properties of the magnetic materials to a sufficient extent.

That is, in Patent Document 1, it is described that iron particles on which a surface oxide layer is present are subjected to reducing treatment and then to nitridation treatment to obtain Fe₁₆N₂. However, in the Patent Document 1, it is not taken into consideration to enhance a maximum energy product of the material. In addition, in Patent Document 1, it is required that the nitridation reaction is conducted for a prolonged period of time. Therefore, the technique described in Patent Document 1 has failed to provide an industrially suitable process.

Also, in Patent Document 2, it is described that iron oxide particles are subjected to reducing treatment to produce metallic iron particles, and the resulting metallic iron particles are subjected to nitridation treatment to obtain Fe₁₆N₂. However, in Patent Document 2, the resulting particles are used as magnetic particles for magnetic recording media and therefore tend to be unsuitable as a hard magnetic material that is required to have a high maximum energy product BHₘₐₓ.

Also, in Patent Documents 3 to 9, there are described giant magnetic substances for magnetic recording materials which can be used instead of ferrite. However, the magnetic substances are produced in the form of not an α"-Fe₁₆N₂ single phase but a mixed phase of still stabler γ'-Fe₄N or ε-Fe₂₋₃N, and martensite (α'-Fe)-like metal or ferrite (α-Fe) - like metal.

Also, in Patent Document 10, it is described that the use of additive elements is essential, but there are no detailed discussions concerning the need for the additive elements. Further, the obtained product tends to be not suitable as a hard magnetic material that is required to have a high maximum energy product BHₘₐₓ, in view of magnetic properties thereof.

In Non-Patent Documents 1 and 2, the α" -Fe₁₆N₂ single phase has been successfully produced in the form of a thin layer. However, the α"-Fe₁₆N₂ single phase in the form of such a thin layer is usable only in limited applications, and therefore unsuitable for use in more extensive applications. Further, these conventional materials have problems concerning productivity and economy when producing a generally used magnetic material therefrom.

In consequence, an object of the present invention is to provide a process for producing Fe₁₆N₂ ferromagnetic particles having a high purity whose surface is coated with a very thin FeO layer, and an anisotropic magnet, a bonded magnet and a compacted magnet obtained by using the ferromagnetic particles.

### MEANS FOR SOLVING THE PROBLEM

The above conventional problems can be solved by the following aspects of the present invention.

That is, according to the present invention, there is provided a process for producing ferromagnetic particles, comprising the steps of:
subjecting iron compound particles to reducing treatment at a temperature of 160 to 420°C; and
then subjecting the resulting particles to nitridation treatment at a temperature of 130 to 170°C,
the iron compound particles having an average major axis length of 40 to 5000 nm, an aspect ratio (major axis diameter/minor axis diameter) of 1 to 200, a ratio of an average deviation of major axis lengths of the particles to the average major axis length of the particles [(average deviation of major axis lengths of particles)/(average major axis length of particles)] of not more than 50%, a uniformity coefficient (U_{c}) of not more than 1.55, a coefficient of curvature (C_{g}) of not less than 0.95, and a wide-range coefficient of curvature (C_{g}2) of not less than 0.40 (Invention 1).

Also, according to the present invention, there is provided the process for producing ferromagnetic particles as described in the above Invention 1, wherein the iron compound particles are formed of at least one material selected from the group consisting of magnetite, hematite and goethite (Invention 2).

Also, according to the present invention, there is provided the process for producing ferromagnetic particles as described in the above Invention 1 or 2, wherein the ferromagnetic particles produced respectively have an outer shell in which FeO is present in the form of a layer having a thickness of not more than 5 nm (Invention 3).

Also, according to the present invention, there is provided the process for producing ferromagnetic particles as described in any one of the above Inventions 1 to 3, wherein a volume fraction of the FeO in the ferromagnetic particles produced is controlled such that a ratio of a volume of the FeO to a whole volume of the particles is not more than 25% (Invention 4).

Also, according to the present invention, there is provided the process for producing ferromagnetic particles as described in any one of the above Inventions 1 to 4, wherein a coercive force H_{c} of the ferromagnetic particles produced is not less than 1.5 kOe, and a saturation magnetization value σₛ of the ferromagnetic particles as measured at 5 K is not less than 150 emu/g (Invention 5).

Also, according to the present invention, there is provided the process for producing ferromagnetic particles as described in any one of the above Inventions 1 to 5, wherein a nitridation rate of the ferromagnetic particles produced as determined from a lattice constant thereof is 8.0 to 13 mol% (Invention 6).

In addition, according to the present invention, there is provided a process for producing an anisotropic magnet, comprising the steps of:
obtaining ferromagnetic particles by the process as described in any one of the above Inventions 1 to 6; and
subjecting the resulting ferromagnetic particles to magnetic orientation (Invention 7).

Further, according to the present invention, there is provided a process for producing a bonded magnet, comprising the steps of:
obtaining ferromagnetic particles by the process as described in any one of the above Inventions 1 to 6;
dispersing the resulting ferromagnetic particles in a binder resin to obtain a mixture; and
molding the resulting mixture (Invention 8).

Further, according to the present invention, there is provided a process for producing a compacted magnet, comprising the steps of:
obtaining ferromagnetic particles by the process as described in any one of the above Inventions 1 to 6; and
compressing-molding the resulting ferromagnetic particles in a magnetic field (Invention 9).

### EFFECT OF THE INVENTION

In the process for producing the ferromagnetic particles according to the present invention, it is possible to readily produce stable Fe₁₆N₂ particles having a high purity, and therefor the production process is suitable as a process for producing ferromagnetic particles.

### PREFERRED EMBODIMENTS FOR CARRYING OUT THE INVENTION

First, the process for producing ferromagnetic particles according to the present invention is described.

In the process for producing ferromagnetic particles according to the present invention, as the starting material, there are used iron compound particles comprising iron oxide or iron oxyhydroxide which have a ratio of an average deviation of major axis lengths of the particles to an average major axis length of the particles [(average deviation of major axis lengths of particles)/(average major axis length of particles)] of not more than 50%, a uniformity coefficient (U_{c}) of not more than 1.55, a coefficient of curvature (C_{g}) of not less than 0.95, and a wide-range coefficient of curvature (C_{g}2) of not less than 0.40, an average major axis length of 40 to 5000 nm, and an aspect ratio (major axis diameter/minor axis diameter) of 1 to 200. The iron compound particles are subjected to reducing treatment at a temperature of 160 to 420°C, and then to nitridation treatment at a temperature of 130 to 170°C to produce the ferromagnetic particles.

The iron compound particles as the starting material are formed of iron oxide or iron oxyhydroxide. Examples of the iron oxide or iron oxyhydroxide include, but are not particularly limited to, magnetite (Fe₃O₄), γ-Fe₂O₃, hematite (α-Fe₂O₃), goethite (α-FeOOH), β-FeOOH, γ-FeOOH and FeO. The starting material may be in the form of a single phase, or may comprise impurities. As the impurities, the starting material may also comprise iron oxide or iron oxyhydroxide other than those contained in a main phase thereof.

The starting material for obtaining the ferromagnetic particles according to the present invention have a ratio of an average deviation of major axis lengths of the particles to an average major axis length of the particles [(average deviation of major axis lengths of particles)/(average major axis length of particles)] of not more than 50%. When the ratio of [(average deviation of major axis lengths of particles)/(average major axis length of particles) is more than 50%, the volume fraction of an Fe₁₆N₂ compound phase in the obtained ferromagnetic particles is less than 80% as measured by Mössbauer spectrum data. The ratio of [(average deviation of major axis lengths of particles)/(average major axis length of particles) of the starting material is preferably not more than 45% and more preferably not more than 40%. The major axis length of the particles as used herein means a length of the largest particles among particles having various shapes. When the particles have a shape with a high symmetry such as a spherical shape and a cubic shape, the major axis length of the particles means a length of any of spherical particles or cubic particles. The lower limit of the ratio of [(average deviation of major axis lengths of particles)/(average major axis length of particles) is usually 1%.

The starting material for obtaining the ferromagnetic particles according to the present invention have a uniformity coefficient (U_{c}) of not more than 1.55. When the uniformity coefficient (U_{c}) is more than 1.55, the volume fraction of an Fe₁₆N₂ compound phase in the obtained ferromagnetic particles is less than 80% as measured by Mössbauer spectrum data. The uniformity coefficient (U_{c}) of the starting material is preferably not more than 1.50 and more preferably not more than 1.40. The lower limit of the uniformity coefficient (U_{c}) is usually 1.

The starting material for obtaining the ferromagnetic particles according to the present invention have a coefficient of curvature (C_{g}) of not less than 0.95. When the coefficient of curvature (C_{g}) is less than 0.95, the volume fraction of an Fe₁₆N₂ compound phase in the obtained ferromagnetic particles is less than 80% as measured by Mössbauer spectrum data. The coefficient of curvature (C_{g}) of the starting material is preferably not less than 0.96. The upper limit of the coefficient of curvature (C_{g}) is usually about 2.

The starting material for obtaining the ferromagnetic particles according to the present invention have a wide-range coefficient of curvature (C_{g}2) of not less than 0.40. When the wide-range coefficient of curvature (C_{g}2) is less than 0.40, the volume fraction of an Fe₁₆N₂ compound phase in the obtained ferromagnetic particles is less than 80% as measured by Mössbauer spectrum data. The wide-range coefficient of curvature (C_{g}2) of the starting material is preferably not less than 0.50, and more preferably not less than 0.70. The upper limit of the wide-range coefficient of curvature (C_{g}2) is usually about 2.

Meanwhile, the above uniformity coefficient (U_{c}), coefficient of curvature (C_{g}) and wide-range coefficient of curvature (C_{g}2) are determined by the methods described below in Examples.

In the present invention, the iron oxide or iron oxyhydroxide which is in the form of particles having an average major axis length of 40 to 5000 nm and an aspect ratio (major axis diameter/minor axis diameter) of 1 to 200 is used as the starting material. The average major axis length of the iron oxide or iron oxyhydroxide particles is preferably 45 to 4000 nm and more preferably 45 to 3000 nm.

The particle shape of the iron oxide or iron oxyhydroxide used as the starting material is not particularly limited, and may have any shape such as an acicular shape, a granular shape, a spindle shape, a rectangular parallelopiped shape and a spherical shape.

The iron compound particles used in the present invention have an aspect ratio (major axis diameter/minor axis diameter) of 1.0 to 200. When the aspect ratio of the iron compound particles is more than the above-specified range, it may be difficult to obtain the aimed ferromagnetic particles comprising an Fe₁₆N₂ compound phase in an amount of not less than 80% as measured by Mössbauer spectrum. The aspect ratio of the iron compound particles is preferably 1.0 to 190 and more preferably 1.0 to 180.

The BET specific surface area of the iron compound particles as the starting material is preferably 20 to 250 m²/g. When the BET specific surface area of the iron compound particles is less than 2,0 m²/g, the nitridation of the iron compound particles tends to hardly proceed, so that it may be difficult to obtain the aimed ferromagnetic particles comprising an Fe₁₆N₂ compound phase in an amount of not less than 80% as measured by Mössbauer spectrum. When the BET specific surface area of the iron compound particles is more than 250 m²/g, the nitridation of the iron compound particles tends to excessively proceed, so that it may also be difficult to obtain the aimed ferromagnetic particles comprising an Fe₁₆N₂ compound phase in an amount of not less than 80% as measured by Mössbauer spectrum data. The BET specific surface area of the iron compound particles is more preferably 30 to 200 m²/g and still more preferably 35 to 180 m²/g.

The acicular goethite particles and the spindle-shaped goethite particles used in the present invention may be produced by a so-called wet method in which a suspension comprising any of a ferrous hydroxide colloid, an iron carbonate and an iron-containing precipitate which are obtained by reacting a ferrous salt aqueous solution with an alkali hydroxide, an alkali carbonate and both of the alkali hydroxide and the alkali carbonate, respectively, is subjected to oxidation reaction by flowing an oxygen-containing gas therethrough.

Also, the acicular magnetite particles or the spindle-shaped magnetite particles may be produced by subjecting the above goethite particles to reducing treatment under heating at a temperature of 250 to 500°C in a reducing atmosphere.

The magnetite particles used in the present invention may be produced by a so-called wet method in which an oxygen-containing gas is flowed through a suspension comprising a ferrous hydroxide colloid obtained by reacting a ferrous salt aqueous solution with an alkali hydroxide. Alternatively, the magnetite particles used in the present invention may be produced by a so-called wet method in which a ferrous salt aqueous solution, a ferric salt aqueous solution and an alkali hydroxide are reacted with each other.

The hematite particles used in the present invention may be produced by heating the magnetite particles obtained by the above wet method in air at a temperature of 500 to 1000°C. Alternatively, the hematite particles used in the present invention may be produced by heating the goethite particles obtained by the above wet method in air at a temperature of not lower than 80°C.

In the present invention, in order to obtain the iron compound particles having a desired particle size distribution, there may be used any of the method of controlling the order of addition of the raw materials in the above goethite production reaction or magnetite production reaction, the method of allowing additives capable of controlling the reaction rate to coexist in the reaction system, the method of controlling the oxidation rate, or the method of controlling concentrations of the raw materials.

The particle diameter of the aggregated particles of the iron oxide or iron oxyhydroxide used as the starting material in the present invention is preferably controlled such that D50 thereof is not more than 40 µm and D90 thereof is not more than 150 µm. Since the starting material used in the present invention is in the form of particles, the aggregated particles thereof generally have a considerably large particle diameter. The method of reducing the particle diameter of the aggregated particles is not particularly limited. For example, there may be used a method of subjecting the aggregated particles to wet atomization using a ball mill or a planetary ball mill or to pulverization using a jet mill, in the presence of an organic solvent such as an alcohol compound, a ketone compound, toluene, hexane, carbon tetrachloride and cyclohexane. The particle diameter of the aggregated particles of the iron oxide or iron oxyhydroxide used as the starting material in the present invention is more preferably controlled such that D50 thereof is not more than 35 µm and D90 thereof is not more than 125 µm, still more preferably controlled such that D50 thereof is not more than 30 µm and D90 thereof is not more than 100 µm.

The iron compound particles used in the present invention are preferably allowed to previously pass through a mesh having a size of not more than 250 µm before subjected to the heat treatments. When the mesh size is more than 250 µm, it may be difficult to obtain the ferromagnetic particles capable of exhibiting desired magnetic properties. The mesh size is more preferably not more than 236 µm.

When the iron oxyhydroxide is subjected to dehydration treatment according to the requirement, the temperature of the dehydration treatment is preferably 80 to 350°C. When the temperature of the dehydration treatment is lower than 80°C, substantially no dehydration tends to proceed. When the temperature of the dehydration treatment is higher than 350°C, it may be difficult to obtain metallic iron particles at a low temperature in the subsequent reducing treatment. The temperature of the dehydration treatment is preferably 85 to 300°C.

The dehydration treatment may be followed by pulverization treatment using a jet mill, a ball mill or the like. These treatments may be suitably carried out in an inert gas such as helium, argon and nitrogen.

The atmosphere used upon the dehydration treatment is preferably air or a nitrogen atmosphere.

The temperature used upon the reducing treatment is 160 to 420°C. When the reducing treatment temperature is lower than 160°C, the iron compound particles may fail to be reduced into metallic iron to a sufficient extent. When the reducing treatment temperature is higher than 420°C, although the iron compound particles can be reduced into metallic iron, the sintering between the particles also tends to undesirably proceed, resulting in deteriorated nitridation rate thereof. The reducing treatment temperature is preferably 165 to 380°C and more preferably 170 to 350°C.

The reducing method is not particularly limited. There may be used those reducing methods using a hydrogen gas flow or various hydride compounds.

The reducing treatment time is not particularly limited, and is preferably 1 to 24 h. When the reducing treatment time is longer than 24 h, the sintering between the particles tends to proceed depending upon the reducing treatment temperature, so that the nitridation treatment as the subsequent stage treatment tends to hardly proceed. When the reducing treatment time is shorter than 1 h, the reducing treatment tends to often become insufficient. The reducing treatment time is more preferably 1.5 to 15 h.

The reducing treatment may be followed by pulverization treatment using a jet mill, a ball mill or the like. These treatments may be suitably carried out in an inert gas such as helium, argon and nitrogen.

After completion of the reducing treatment, the nitridation treatment is carried out.

The nitridation treatment temperature is 130 to 170°C. When the nitridation treatment temperature is lower than 130°C, the nitridation treatment tends to hardly proceed to a sufficient extent. When the nitridation treatment temperature is higher than 170°C, γ' -Fe₄N or ε-Fe₂₋₃N tends to be undesirably produced, so that it may be difficult to obtain the aimed ferromagnetic particles comprising an Fe₁₆N₂ compound phase in an amount of not less than 80% as measured by Mössbauer spectrum. The reducing treatment temperature is preferably 135 to 165°C.

The nitridation treatment time is preferably not longer than 50 h. When the step is completed for a time period as short as possible, the yield per unit time can be increased, so that it is possible to attain an excellent industrial productivity. Therefore, the nitridation treatment time is more preferably not longer than 36 h.

The atmosphere used upon the nitridation treatment is preferably an NH₃ atmosphere. As the nitridation treatment atmosphere, in addition to NH₃, there may also be used N₂, H₂, a hydrocarbon gas such as CH₄ and a mixture of these gases with a superheated steam, etc.

The ferromagnetic particles according to the present invention are described.

The ferromagnetic particles according to the present invention comprise an Fe₁₆N₂ compound phase in an amount of not less than 80% as measured by Mössbauer spectrum data. In the Mössbauer spectrum, upon production of Fe₁₆N₂, a peak of an iron site having an internal magnetic field of not less than 330 kOe is observed. In particular, there is such a feature that the peak is observed in the vicinity of 395 kOe.

In general, when the content of other phases than the above compound phase in the ferromagnetic particles is increased, the resulting particles tend to strongly exhibit properties as those of a soft magnet and therefore tend to be unsuitable as a material for a ferromagnetic hard magnet. However, the ferromagnetic particles of the present invention can exhibit properties as a material for a ferromagnetic hard magnet to a sufficient extent.

The ferromagnetic particles respectively comprise a core formed of Fe₁₆N₂ and an outer shell in which FeO is present to thereby form a simple structure of Fe₁₆N₂/FeO from the core towards the outer shell. The Fe₁₆N₂ and FeO are preferably topotactically bonded to each other to form a crystallographically continuous structure. The oxide layer of the outer shell may contain Fe₃O₄, Fe₂O₃ or α-Fe. When the Fe₁₆N₂ particles have a low purity, these impurities may be contained in the resulting particles. However, the high-purity particles have an outer shell comprising FeO only. The thickness of the FeO layer of the outer shell is not more than 5 nm and preferably not more than 4 nm. With the increase in purity of the Fe₁₆N₂ particles, the thickness of the FeO layer tends to be reduced. The thickness of the FeO layer is not particularly limited, and is preferably as small as possible because a volume fraction of Fe₁₆N₂ in the particles is improved. The lower limit of the thickness of the FeO layer is not particularly limited, and is about 0.5 nm.

The volume fraction of FeO on the surface of the respective ferromagnetic particles according to the present invention is controlled such that the ratio of the volume of FeO to a whole volume of the particles is preferably not more than 25%. When the purity of Fe₁₆N₂ in the particles is increased, the volume fraction of FeO therein is reduced. The volume fraction of FeO in the respective ferromagnetic particles is more preferably not more than 23% and still more preferably 3 to 20%.

The ferromagnetic particles according to the present invention preferably have a coercive force H_{c} of not less than 1.5 kOe and a saturation magnetization value σₛ of not less than 150 emu/g as measured at 5 K. When the saturation magnetization value σₛ and the coercive force H_{c} of the ferromagnetic particles are respectively out of the above-specified ranges, the resulting ferromagnetic particles may fail to exhibit sufficient magnetic properties required for a hard magnetic material. More preferably, the coercive force H_{c} of the ferromagnetic particles is not less than 1.6 kOe, and the saturation magnetization value σₛ of the ferromagnetic particles is not less than 180 emu/g.

The ferromagnetic particles according to the present invention preferably have a nitridation rate of 8 to 13 mol% as determined from a lattice constant thereof. An optimum nitridation rate of the ferromagnetic particles as determined from a chemical composition of Fe₁₆N₂ is 11.1 mol%. The nitridation rate of the ferromagnetic particles is more preferably 8.5 to 12.5 mol% and still more preferably 9.0 to 12 mol%.

The ferromagnetic particles according to the present invention preferably have a BET specific surface area of 5.0 to 40 m²/g. When the BET specific surface area of the ferromagnetic particles is less than 5 m²/g, the nitridation rate of the ferromagnetic particles tends to be lowered, so that the production rate of Fe₁₆N₂ therein tends to be decreased, and it may be difficult to obtain ferromagnetic particles having desired coercive force and saturation magnetization. When the BET specific surface area of the ferromagnetic particles is more than 40 m²/g, it may be difficult to obtain ferromagnetic particles having a desired saturation magnetization value. The BET specific surface area of the ferromagnetic particles is more preferably 5.5 to 38 m²/g and still more preferably 6.0 to 35 m²/g.

Next, the anisotropic magnet according to the present invention is described.

The magnetic properties of the anisotropic magnet according to the present invention may be controlled so as to attain desired magnetic properties (such as a coercive force, a residual magnetic flux density and a maximum energy product) according to the purposes and applications as aimed.

The magnetic orientation method of the magnet is not particularly limited. For example, the ferromagnetic particles comprising an Fe₁₆N₂ compound phase in an amount of not less than 80% as measured by Mössbauer spectrum may be mixed and kneaded together with a dispersant, etc., in an EVA resin (ethylene-vinyl acetate copolymer) at a temperature not lower than a glass transition temperature thereof and then molded, and a desired external magnetic field may be applied to the resulting molded product at a temperature nearly exceeding the glass transition temperature to accelerate a magnetic orientation of the molded product. Alternatively, a resin such as a urethane resin, an organic solvent and the above ferromagnetic particles may be strongly mixed with each other using a paint shaker, etc., and pulverized to prepare an ink, and the resulting ink may be applied and printed on a resin film with a blade or by a roll-to-roll method, and rapidly passed through a magnetic field to magnetically orient the resulting coated film. In addition, the magnetic orientation may be conducted by RIP (resin isostatic pressing) method in order to attain a still higher density and maximize a crystal magnetic anisotropy. The ferromagnetic particles may be previously provided on a surface thereof with an insulation coating layer of silica, alumina, zirconia, tin oxide, antimony oxide or the like. The method of forming the insulation coating layer is not particularly limited, and there may be used a method of adsorbing the insulating material on the surface of the respective particles by controlling a surface potential of the respective particles in a solution of the material, a vapor deposition method such as CVD, etc.

Next, a resin composition for the bonded magnet according to the present invention is described.

The resin composition for the bonded magnet according to the present invention may be prepared by dispersing the ferromagnetic particles according to the present invention in a binder resin. The resin composition for the bonded magnet comprises 85 to 99% by weight of the ferromagnetic particles and the balance comprising the binder resin and other additives.

The ferromagnetic particles may be previously provided on a surface thereof with an insulation coating layer of silica, alumina, zirconia, tin oxide, antimony oxide or the like. The method of forming the insulation coating layer is not particularly limited, and there may be used a method of adsorbing the insulating material on the surface of the respective particles by controlling a surface potential of the respective particles in a solution of the material, a vapor deposition method such as CVD, etc.

The binder resin used in the resin composition for the bonded magnet may be selected from various resins depending upon the molding method used. In the case of an injection molding method, an extrusion molding method and a calender molding method, thermoplastic resins may be used as the binder resin. In the case of a compression molding method, thermosetting resins may be used as the binder resin. Examples of the thermoplastic resins used in the present invention include nylon (PA)-based resins, polypropylene (PP)-based resins, ethylene-vinyl acetate (EVA)-based resins, polyphenylene sulfide (PPS)-based resins, liquid crystal plastic (LCP)-based resins, elastomer-based resins and rubber-based resins. Examples of the thermosetting resins used in the present invention include epoxy-based resins and phenol-based resins.

Meanwhile, upon production of the resin composition for the bonded magnet, in order to facilitate molding of the composition and attain sufficient magnetic properties, in addition to the binder resin, there may also be used various known additives such as a plasticizer, a lubricant and a coupling agent, if required. Further, various other kinds of magnet particles such as ferrite magnet particles may also be mixed in the resin composition.

These additives may be adequately selected according to the aimed applications. As the plasticizer, commercially available products may be appropriately used according to the resins used. The total amount of the plasticizer added is about 0.01 to about 5.0% by weight based on the weight of the binder resin.

Examples of the lubricant used in the present invention include stearic acid and derivatives thereof, inorganic lubricants, oil-based lubricants. The lubricant may be used in an amount of about 0.01 to about 1.0% by weight based on a whole weight of the bonded magnet.

As the coupling agent, commercially available products may be used according to the resins and fillers used. The coupling agent may be used in an amount of about 0.01 to about 3.0% by weight based on the weight of the binder resin used.

The resin composition for the bonded magnet according to the present invention may be produced by mixing and kneading the ferromagnetic particles with the binder resin.

The mixing of the ferromagnetic particles with the binder resin may be carried out using a mixing device such as a Henschel mixer, a V-shaped mixer and a Nauta mixer, whereas the kneading may be carried out using a single-screw kneader, a twin-screw kneader, a mill-type kneader, an extrusion kneader or the like.

Next, the bonded magnet according to the present invention is described.

The magnetic properties of the bonded magnet may be controlled so as to attain desired magnetic properties (such as a coercive force, a residual magnetic flux density and a maximum energy product) according to the aimed applications.

The bonded magnet according to the present invention may be produced by subjecting the above resin composition for the bonded magnet to a molding process by a known molding method such as an injection molding method, an extrusion molding method, a compression molding method or a calender molding method, and then subjecting the resulting molded product to electromagnet magnetization or pulse magnetization by an ordinary method to form the bonded magnet.

Next, the sintered magnet according to the present invention is described.

The sintered magnet according to the present invention may be produced by subjecting the ferromagnetic particles to compression molding and heat treatment. The magnetic field applied and the conditions of the compression molding are not particularly limited, and may be adjusted to those values required for the resulting compacted magnet. For example, the magnetic field may be adjusted to the range of 1 to 15 T, and the pressure upon the compression molding may be adjusted to the range of 1.5 to 15 ton/cm². The molding machine used is not particularly limited, and there may be used CIP or RIP. The shape or size of the resulting molded product may be appropriately determined according to the applications thereof.

The ferromagnetic particles may be previously provided on a surface thereof with an insulation coating layer of silica, alumina, zirconia, tin oxide, antimony oxide or the like. The method of forming the insulation coating layer is not particularly limited, and there may be used a method of adsorbing the insulating material on the surface of the respective particles by controlling a surface potential of the respective particles in a solution of the material, a vapor deposition method such as CVD, etc.

Examples of the lubricant used in the sintered magnet of the present invention include stearic acid and derivatives thereof, inorganic lubricants, oil-based lubricants. The lubricant may be used in an amount of about 0.01 to about 1.0% by weight based on a whole weight of the bonded magnet.

Examples of the binder resin used in the sintered magnet of the present invention include polyolefins such as polyethylene and polypropylene; thermoplastic resins such as polyvinyl alcohol, polyethyleneoxide, PPS, liquid crystal polymers, PEEK, polyimides, polyether imides, polyacetals, polyether sulfones, polysulfones, polycarbonates, polyethylene terephthalate, polybutylene terephthalate, polyphenylene oxide, polyphthalamide and polyamides; and mixtures thereof. The binder resin may be used in an amount of about 0.01 to about 5.0% by weight based on a whole weight of the bonded magnet.

The heat treatment may be conducted by appropriately using a continuous furnace, an RF high frequency furnace, etc. The heat treatment conditions are not particularly limited.

Next, the compacted magnet according to the present invention is described.

The compacted magnet according to the present invention may be produced by subjecting the resulting ferromagnetic particles to compression molding in a magnetic field. The magnetic field applied and the conditions of the compression molding are not particularly limited, and may be adjusted to those values required for the resulting compacted magnet. For example, the magnetic field may be adjusted to the range of 1.0 to 15 T, and the pressure upon the compression molding may be adjusted to the range of 1.5 to 15 ton/cm². The molding machine used is not particularly limited, and there may be used CIP or RIP. The shape or size of the resulting molded product may be appropriately determined according to the applications thereof.

The ferromagnetic particles may be previously provided on a surface thereof with an insulation coating layer of silica, alumina, zirconia, tin oxide, antimony oxide or the like. The method of forming the insulation coating layer is not particularly limited, and there may be used a method of adsorbing the insulating material on the surface of the respective particles by controlling a surface potential of the respective particles in a solution of the material, a vapor deposition method such as CVD, etc.

Examples of the lubricant used in the compacted magnet of the present invention include stearic acid and derivatives thereof, inorganic lubricants, oil-based lubricants. The lubricant may be used in an amount of about 0.01 to about 1.0% by weight based on a whole weight of the bonded magnet.

Examples of the binder resin used in the compacted magnet of the present invention include polyolefins such as polyethylene and polypropylene; thermoplastic resins such as polyvinyl alcohol, polyethyleneoxide, PPS, liquid crystal polymers, PEEK, polyimides, polyether imides, polyacetals, polyether sulfones, polysulfones, polycarbonates, polyethylene terephthalate, polybutylene terephthalate, polyphenylene oxide, polyphthalamide and polyamides; and mixtures thereof. The binder resin may be used in an amount of about 0.01 to about 5.0% by weight based on a whole weight of the bonded magnet.

The heat treatment may be conducted by appropriately using a continuous furnace, an RF high frequency furnace, etc. The heat treatment conditions are not particularly limited.

### EXAMPLES

Typical examples of the present invention are as follows.

The specific surface area values of the iron oxide or iron oxyhydroxide as the starting material and the resulting ferromagnetic particles were measured by a B.E.T. method based on nitrogen absorption.

The primary particle sizes of the iron oxide or iron oxyhydroxide as the starting material and the resulting ferromagnetic particles were measured using a transmission electron microscope "JEM-1200EXII" manufactured by Nippon Denshi Co., Ltd. In this case, particle sizes of not less than 120 particles randomized were measured. The average major axis length in terms of the number of particles and the average deviation thereof, D10, D30, D60, U_{c}, C_{g} and C_{g}2 were determined from the resulting data.

Meanwhile, the ratio of the average deviation of major axis lengths of the particles to the average major axis length of the particles [(average deviation of major axis lengths of particles)/(average major axis length of particles)] represents a degree of variation in major axis length of primary particles of the starting material particles.

The value U_{c} was determined from D60/D10, and represents a gradient of the curvature. As the value U_{c} was closer to 1, the major axis length of the primary particles became more uniform, whereas as the value U_{c} was increased, the variation in major axis length of the primary particles became larger.

Also, the value C_{g} was determined from (D30)²/(D60 x D10), and represents a degree of flatness of a cumulative particle size distribution curve of the particles. As the value C_{g} was decreased, the particle size distribution became wider.

In addition, the value C_{g}2 was determined from (D40)²/(D80 x D20). This calculation method is not generally used. However, in the present invention, for the sake of better understanding of flatness of the cumulative particle size distribution curve over a much wider range, it is intended to use the above calculation method.

The particle size distribution of aggregated particles of the starting material was measured in pure water as a solvent using an analyzer "Mastersizer 2000E" manufactured by Malvern Instrument Ltd. From the obtained data, D50 (median diameter) and D90 in terms of a volume of the particles were determined. Upon measuring the data, a predetermined amount of a sample was charged into pure water while stirring at an ultrasonic output of 50% and 1500 rpm, and after 5 sec, the measurement was initiated. When the time until initiating the measurement is excessively prolonged, it is not possible to reflect the real state owing to deaggregation and dispersion of the aggregated particles by the ultrasonic wave and stirring.

The compositions of the iron oxide or iron oxyhydroxide as the starting material and the resulting ferromagnetic particles were determined by analyzing a solution prepared by dissolving the sample in an acid under heating using a plasma emission spectroscopic analyzer "SPS4000" manufactured by Seiko Denshi Kogyo Co., Ltd.

The constituting phases of the starting material and the resulting ferromagnetic particles were determined by identification using a powder X-ray diffractometer (XRD; "RINT-2500" manufactured by Rigaku Co., Ltd.), by electron diffraction (ED) using a transmission electron microscope (TEM) "JEM-2000EX" manufactured by Nippon Denshi Co., Ltd., and an ultra-high resolution spectroscopic electron microscope (HREM) "HF-2000" manufactured by Hitachi High-Technologies Corp., or by analysis and evaluation using an electron energy loss spectroscopy (EELS), an energy dispersive X-ray spectroscopy (EDS) or a scanning transmission electron microscope (STEM). In the ED or the analysis and evaluation using EELS, STEM or EDS, it was possible to determine whether or not impurity phases such as α-Fe, Fe₄N and Fe₃₋ₓN were locally present in a micro state which could not be determined by XRD.

The volume fraction of FeO was evaluated by the following method.

First, the ferromagnetic particles were measured by EELS to determine FeO being present on the surface of the respective particles. Next, the energy state of O (oxygen) sites at several positions spaced by about 10 nm inwardly from a near surface of the respective particles was analyzed to determine a position of FeO being present therein. Separately, the ferromagnetic particles were observed by TEM or HREM to determine a portion of each particle having a contrast relative to a central portion of the particle. From the comparison with the results of the above EELS, the position of FeO was determined, so that it was confirmed that the portion of the particle having a contrast relative to a central portion of the particle was FeO. The thickness of FeO was measured, and the volume fraction of FeO was calculated from the thus measured thickness of FeO and the particle shape.

The lattice constant of the resulting ferromagnetic particles was determined using XRD. The amount of nitrogen was determined from the thus determined lattice constant by referring to the following documents.

### (Reference Documents)

### ·Yukiko Takahashi

Doctorial thesis of Graduate School of Tohoku University, School of Engineering, Electrical Engineering, 2001, "Study on synthesis and magnetism of non-equilibrium α',α",γ phases in (C, N)-added Fe-based alloy thin layer" ·K. H. Jack

Proc. Roy. Soc., A208, 216(1951) "The iron-nitrogen system: the preparation and the crystal structures of nitrogen-austenite (γ) and nitrogen-martensite (α')"

The magnetic properties of the obtained ferromagnetic particles were measured at room temperature (300 K) in a magnetic field of 0 to 9 T using a physical property measurement system (PPMS + VSM) manufactured by Quantum Design Japan Co., Ltd. Separately, the temperature dependency of a magnetic susceptibility of the ferromagnetic particles in a temperature range of from 5 K to 300 K was also evaluated.

The measurement of Mössbauer spectrum of the obtained ferromagnetic particles was carried out as follows. That is, the ferromagnetic particles were intimately mixed with a silicone grease in a glove box in an argon atmosphere. The resulting mixture was wrapped with an aluminum foil and subjected to the measurement of Mössbauer spectrum in a temperature range of from a liquid helium temperature to room temperature for 3 to 4 days. Further, the obtained data was analyzed to determine a production ratio of Fe₁₆N₂ in the obtained ferromagnetic particles. As impurity phases, α-Fe, Fe₄N, Fe₃₋ₓN, para-components of iron oxide or the like were analyzed.

### Example 1:

### <Preparation of starting material>

A nitrogen gas was flowed at a rate of 4 L/min through 3.8 L of an aqueous solution prepared by dissolving 424 g of sodium carbonate in water and maintained at 58°C. Then, 1.2 L of an aqueous solution prepared by dissolving 556 g of ferrous sulfate heptahydrate in water were charged into the aqueous solution over 30 sec. Thereafter, 150 mL of an aqueous solution prepared by dissolving 15.36 g of sodium propionate in water were charged into the resulting solution over 5 sec. At this time, the temperature of the solution was dropped to 48°C, and the solution was held at that temperature for 3.5 hr. Next, the flowing gas was replaced with oxygen, and the oxygen gas was flowed at a rate of 4 L/min. While care was taken for the temperature of the solution not to exceed 50°C, the solution was further held for 3.5 hr. The resulting particles were separated by filtration using a nutshe, and sufficiently washed with pure water in an amount of 250 mL per 5 g of the sample. Successively, the obtained particles were dried at 125°C using a forced air dryer overnight. The resulting sample was spindle-shaped goethite particles having an average major axis length of 670 nm, an aspect ratio of 12.2 and a specific surface area of 65.0 m²/g. The resulting particles had a ratio of [(average deviation of major axis lengths of particles)/(average major axis length of particles)] of 11.0%, U_{c} of 1.24, C_{g} of 0.99, and C_{g}2 of 0.97.

### <Pulverization treatment of starting material>

Next, 3 g of the dried particles as the sample were added to 40 mL of a hexane solvent, and subjected to pulverization treatment together with 3 mmφ silicon nitride beads at room temperature for 0.5 hr using a planetary ball mill whose inside atmosphere was replaced with a nitrogen gas, and then the resulting particles were taken out again from the ball mill. The thus obtained particles were subjected to measurement of a particle size distribution thereof. As a result, it was confirmed that D50 of the particles was 15.9 µm, and D90 thereof was 48.0 µm.

### <Reducing treatment and nitridation treatment of starting material>

The resulting particles were classified by a vibration sieve to extract only aggregated particles having a particle diameter of not more than 250 µm therefrom. Then, 50 g of the obtained sample particles were charged in an alumina sagger (125 mm x 125 mm x 30 mm in depth), and allowed to stand in a heat treatment furnace. An inside of the furnace was subjected to vacuum evacuation and then filled with an argon gas, and further subjected to vacuum evacuation again. This procedure was repeated three times. Thereafter, while flowing a hydrogen gas at a flow rate of 5 L/min through the furnace, the sample particles were heated to 282°C at a temperature rise rate of 5°C/min and held at that temperature for 2 hr to subject the particles to reducing treatment. Thereafter, the particles were cooled down to 148°C at which supply of the hydrogen gas was stopped. Meanwhile, it was confirmed that the sample withdrawn in this condition was constituted of an α-Fe single phase and had a specific surface area of 9.3 m²/g. Successively, while flowing a mixed gas comprising an ammonia gas, a nitrogen gas and a hydrogen gas at a mixing ratio of 9.5:0.45:0.05 at a flow rate of 10 L/min in total through the furnace, the particles were subjected to nitridation treatment at 148°C for 9 hr. Thereafter, while flowing an argon gas through the furnace, the particles were cooled down to room temperature at which supply of the argon gas was stopped, and the inside atmosphere of the furnace was replaced with air over 3 hr. Next, the resulting sample was withdrawn into a glove box directly connected to the heat treatment furnace.

### <Analysis and evaluation of resulting sample>

As a result of subjecting the resulting particles to XRD and ED analysis, the particles comprised Fe₁₆N₂, and the content of the Fe₁₆N₂ compound phase therein as measured by Mössbauer spectrum was 100%. In addition, the obtained particles had an average major axis length of 631 nm and a specific surface area of 9.3 m²/g. The layer thickness of FeO of the respective particles was less than 1 nm and not measurable, and therefore the volume fraction of FeO was 0%. The nitridation rate of the particles was 10.8%. As a result of measurement of magnetic properties of the particles, it was confirmed that the particles had a saturation magnetization value σₛ of 235 emu/g as measured at 5 K and a coercive force H_{c} of 2.6 kOe.

### Example 2:

Spindle-shaped goethite particles were produced by the same method as in Example 1 except that sodium hydroxide, ferrous sulfate heptahydrate and sodium propionate were used in amounts of 424 g (3.8 L), 556 g (1.2 L) and 15.36 g (180 mL), respectively, and the nitrogen gas and the oxygen gas were flowed through the reaction system in amounts of 3.5 L/min and 4 L/min, respectively. Also, the temperature of the sodium carbonate aqueous solution upon charging the ferrous sulfate aqueous solution thereinto was adjusted to 50°C, and the temperature of the reaction solution during flowing the nitrogen gas and the oxygen gas therethrough was held at 41°C. The resulting particles were separated by filtration using a nutshe, and sufficiently washed with pure water in an amount of 180 mL per 5 g of the sample. The obtained sample was spindle-shaped goethite particles having an average major axis length of 282 nm, an aspect ratio of 6.8 and a specific surface area of 112 m²/g. The resulting particles had a ratio of [(average deviation of major axis lengths of particles)/(average major axis length of particles)] of 9.6%, U_{c} of 1.21, C_{g} of 0.97, and C_{g}2 of 0.94. Successively, the obtained particles were dried at 130°C using a forced air dryer overnight. Further, only the aggregated particles having a particle size of not more than 90 µm were extracted using an atomizer mill and a vibrating sieve. As a result of subjecting the resulting particles to measurement of a particle size distribution thereof, D50 of the particles was 21.6 µm, and D90 thereof was 64.4 µm.

Next, the above obtained sample particles were subjected to reducing treatment and then to nitridation treatment by the same method as in Example 1. Specifically, the reducing treatment was carried out at 292°C for 3 hr. Meanwhile, the sample withdrawn in this condition was constituted of an α-Fe single phase and had a specific surface area of 16.9 m²/g. The nitridation treatment was carried out at 152°C for 7 hr while flowing an ammonia gas at a flow rate of 10 L/min.

As a result of subjecting the resulting particles to XRD and ED analysis, the particles comprised Fe₁₆N₂, and the content of the Fe₁₆N₂ compound phase therein as measured by Mössbauer spectrum was 93%. In addition, the obtained particles had an average major axis length of 269 nm, a specific surface area of 16.8 m²/g, a layer thickness of FeO of 2.8 nm, a volume fraction of FeO of 21.5% and a nitridation rate of 9.0%. As a result of measurement of magnetic properties of the particles, it was confirmed that the particles had a saturation magnetization value σₛ of 232 emu/g as measured at 5 K and a coercive force H_{c} of 2.8 kOe.

### Example 3:

The temperature of an aqueous solution prepared by dissolving 180 g of ferrous chloride tetrahydrate in 2 L of pure water was held at 22°C. While flowing air through the aqueous solution at a rate of 10 L/min, after 10 min, 209 mL of an aqueous solution in which 11.16 g of sodium hydroxide were dissolved, were slowly added thereto over 20 min to adjust a pH value thereof to 7.0. After 1 hr, 100 mL of the reaction solution whose pH value was reduced to 6.7 were transferred into a 300 mL glass beaker, and reacted for 24 hr at room temperature while rotating a stirrer at 300 rpm. The resulting particles were separated by filtration using a nutshe, and sufficiently washed with pure water in an amount of 200 mL per 5 g of the sample. The resulting sample was acicular lepidocrocite particles having an average major axis length of 2700 nm, an aspect ratio of 45.0 and a specific surface area of 83.2 m²/g. The resulting particles had a ratio of [(average deviation of major axis lengths of particles)/(average major axis length of particles)] of 12.2%, U_{c} of 1.13, C_{g} of 1.02, and C_{g}2 of 0.99. The thus obtained particles were dried at 120°C overnight, and successively subjected to heat treatment at 350°C for 1 hr. The thus treated particles were pulverized in an attritor with an agate mortar for 1 hr. As a result of subjecting the resulting particles to measurement of a particle size distribution thereof, D50 of the particles was 5.3 µm, and D90 thereof was 13.8 µm. Further, only the aggregated particles having a particle size of not more than 180 µm were extracted using a vibrating sieve. Furthermore, the obtained particles were subjected to reducing treatment and then to nitridation treatment by the same method as in Example 2. Specifically, the reducing treatment was carried out at 260°C for 3 hr in a hydrogen flow, and the nitridation treatment was carried out at 145°C for 8 hr in an ammonia gas flow. Meanwhile, the sample withdrawn in the condition after the reducing treatment was constituted of an α-Fe single phase and had a specific surface area of 8.3 m²/g.

As a result of subjecting the resulting particles to XRD and ED analysis, the particles comprised Fe₁₆N₂, and the content of the Fe₁₆N₂ compound phase therein as measured by Mössbauer spectrum was 88%. In addition, the obtained particles had an average major axis length of 2630 nm, a specific surface area of 8.3 m²/g, a layer thickness of FeO of 2.3 nm, a volume fraction of FeO of 8.5% and a nitridation rate of 10.6%. As a result of measurement of magnetic properties of the particles, it was confirmed that the particles had a saturation magnetization value σₛ of 221 emu/g and a coercive force H_{c} of 2.7 kOe.

### Example 4:

Five hundred milliliters of an aqueous solution prepared by dissolving 32.36 g of ferric sulfate nonahydrate in water were prepared. Separately, 1.5 L of an aqueous solution prepared by adding pure water to a 18.6 mol/L sodium hydroxide solution were heated to 65°C while stirring at 280 rpm using a fluororesin anchor stirring blade. The above ferric sulfate aqueous solution was charged into the thus obtained sodium hydroxide solution over 30 sec, and the resulting mixed solution was further heated to 95°C and held at that temperature for 6 hr. The resulting particles were separated by filtration using a nutshe, and sufficiently washed with pure water in an amount of 200 mL per 5 g of the sample. The resulting sample was cubic magnetite particles having an average major axis length of 48 nm, an aspect ratio of 1.0 and a specific surface area of 91.0 m²/g. The resulting particles had a ratio of [(average deviation of major axis lengths of particles)/(average major axis length of particles)] of 15.3%, U_{c} of 1.30, C_{g} of 0.91, and C_{g}2 of 0.84. The resulting particles were subjected to wet pulverization using a beads mill with silicon nitride beads having a particle diameter of 500 µm in a toluene solvent at a solid concentration of 15% by weight. As a result of subjecting the resulting particles to measurement of a particle size distribution thereof, D50 of the particles was 9.6 µm, and D90 thereof was 15.3 µm. Further, only the aggregated particles having a particle size of not more than 180 µm were extracted using a vibrating sieve. Furthermore, the obtained particles were subjected to reducing treatment and then to nitridation treatment by the same method as in Example 2. Meanwhile, the sample withdrawn in the condition after the reducing treatment was constituted of an α-Fe single phase and had a specific surface area of 38.0 m²/g.

As a result of subjecting the resulting particles to XRD and ED analysis, the particles comprised Fe₁₆N₂, and the content of the Fe₁₆N₂ compound phase therein as measured by Mössbauer spectrum was 85%. In addition, the obtained particles had an average major axis length of 42 nm, a specific surface area of 37.8 m²/g, a layer thickness of FeO of 1.5 nm, a volume fraction of FeO of 13.8% and a nitridation rate of 11.8%. As a result of measurement of magnetic properties of the particles, it was confirmed that the particles had a saturation magnetization value σₛ of 199 emu/g and a coercive force H_{c} of 1.7 kOe.

### Example 5:

Ferric chloride hexahydrate was weighed in an amount of 27.05 g in a beaker, and pure water was added to the beaker to prepare 500 mL of a solution. Added into the resulting solution were 2.12 g of urea, and the contents of the beaker were stirred at room temperature for 30 min. Next, the contents of the beaker were transferred into a closed pressure reaction vessel, and reacted at 85°C for 3.5 hr while stirring at 200 rpm by using a stirring blade. The resulting particles were separated by filtration using a nutshe, and sufficiently washed with pure water in an amount of 30 mL per 1 g of the sample. The resulting sample was acicular akaganeite having an average major axis length of 130 nm, an aspect ratio of 2.6 and a specific surface area of 96.0 m²/g. The resulting particles had a ratio of [(average deviation of major axis lengths of particles) / (average major axis length of particles)] of 8.7%, U_{c} of 1.09, C_{g} of 0.99, and C_{g}2 of 0.98. Successively, the obtained particles were dried at 40°C overnight. The resulting dried particles were pulverized using an atomizer, and then subjected to pulverization treatment using a wet beads mill in the same manner as in Example 4. As a result of subjecting the resulting particles to measurement of a particle size distribution thereof, D50 of the particles was 5.6 µm, and D90 thereof was 10.7 µm. Further, only the aggregated particles having a particle size of not more than 180 µm were extracted using a vibrating sieve. Furthermore, the obtained particles were subjected to reducing treatment and then to nitridation treatment by the same method as in Example 2. More specifically, the reducing treatment was conducted in a hydrogen flow at 292°C for 2 hr, and the nitridation treatment was conducted in an ammonia gas flow at 150°C for 8 hr. Meanwhile, the sample withdrawn in the condition after the reducing treatment was constituted of an α-Fe single phase and had a specific surface area of 20.0 m²/g.

As a result of subjecting the resulting particles to XRD and ED analysis, the particles comprised Fe₁₆N₂, and the content of the Fe₁₆N₂ compound phase therein as measured by Mössbauer spectrum was 84%. In addition, the obtained particles had an average major axis length of 122 nm, a specific surface area of 19.9 m²/g, a layer thickness of FeO of 1.9 nm, and a volume fraction of FeO of 19.5% and a nitridation rate of 11.6%. As a result of measurement of magnetic properties of the particles, it was confirmed that the particles had a saturation magnetization value σₛ of 199 emu/g and a coercive force H_{c} of 2.0 kOe.

### Comparative Example 1:

A sample comprising spindle-shaped goethite particles as a main phase having an average major axis length of 143 nm, an aspect ratio of 4.9 and a specific surface area of 130 m²/g in which a slight amount of cubic magnetite particles having a particle diameter of about 20 to about 50 nm were included, was prepared in the same manner as in Example 2 except that although the respective raw materials were used in the same amounts as in Example 2, the ferrous sulfate aqueous solution was not charged for 30 sec but added dropwise over 10 min, the amount of the nitrogen gas flowing was 2 L/min, the amount of air flowing was 18 L/min, and the reaction temperature upon flowing the air was 55°C. The resulting particles had a ratio of [(average deviation of major axis lengths of particles)/(average major axis length of particles)] of 66.0%, U_{c} of 1.58, C_{g} of 0.95, and C_{g}2 of 0.34. Successively, the obtained particles were dried at 130°C using a forced air dryer overnight. Then, the dried particles were pulverized in an alumina mortar for 0.5 hr, thereby obtaining sample particles having D50 of 14.5 µm and D90 of 39.9 µm.

Next, the above obtained sample particles were subjected to reducing treatment and then to nitridation treatment by the same method as in Example 1. More specifically, the reducing treatment was carried out at 290°C for 4.5 hr. Meanwhile, the sample withdrawn in this condition was constituted of an α-Fe single phase and had a specific surface area of 19.4 m²/g. The nitridation treatment was carried out at 155°C for 8 hr while flowing an ammonia gas at a flow rate of 10 L/min. After completion of the nitridation treatment, an inside of the furnace used was purged with nitrogen at room temperature, and then the resulting particles were withdrawn as such out of the furnace.

As a result of subjecting the resulting particles to XRD and ED analysis, the particles were in the form of a mixture of Fe₁₆N₂, Fe₄N and α-Fe, and the content of the Fe₁₆N₂ compound phase therein as measured by Mössbauer spectrum was 68%. In addition, the obtained particles had an average major axis length of 122 nm, a specific surface area of 19.4 m²/g, a layer thickness of FeO of 8.8 nm, a volume fraction of FeO of 55.7% and a nitridation rate of 7.3%. As a result of measurement of magnetic properties of the particles, it was confirmed that the particles had a saturation magnetization value σₛ of 119 emu/g as measured at 5 K and a coercive force H_{c} of 1.2 kOe.

## Claims

1. A process for producing ferromagnetic particles, comprising the steps of:
subjecting iron compound particles to reducing treatment at a temperature of 160 to 420°C; and
then subjecting the resulting particles to nitridation treatment at a temperature of 130 to 170°C,
the iron compound particles having an average major axis length of 40 to 5000 nm, an aspect ratio (major axis diameter/minor axis diameter) of 1 to 200, a ratio of an average deviation of major axis lengths of the particles to the average major axis length of the particles [(average deviation of major axis lengths of particles)/(average major axis length of particles)] of not more than 50%, a uniformity coefficient (U_{c}) of not more than 1.55, a coefficient of curvature (C_{g}) of not less than 0.95, and a wide-range coefficient of curvature (C_{g}2) of not less than 0.40.

2. The process for producing ferromagnetic particles according to claim 1, wherein the iron compound particles are formed of at least one material selected from the group consisting of magnetite, hematite and goethite.

3. The process for producing ferromagnetic particles according to claim 1 or 2, wherein the ferromagnetic particles produced respectively have an outer shell in which FeO is present in the form of a layer having a thickness of not more than 5 nm.

4. The process for producing ferromagnetic particles according to any one of claims 1 to 3, wherein a volume fraction of the FeO in the ferromagnetic particles produced is controlled such that a ratio of a volume of the FeO to a whole volume of the particles is not more than 25%.

5. The process for producing ferromagnetic particles according to any one of claims 1 to 4, wherein a coercive force H_{c} of the ferromagnetic particles produced is not less than 1.5 kOe, and a saturation magnetization value σₛ of the ferromagnetic particles as measured at 5 K is not less than 150 emu/g.

6. The process for producing ferromagnetic particles according to any one of claims 1 to 5, wherein a nitridation rate of the ferromagnetic particles produced as determined from a lattice constant thereof is 8.0 to 13 mol%.

7. A process for producing an anisotropic magnet, comprising the steps of:
obtaining ferromagnetic particles by the process as claimed in any one of claims 1 to 6; and
subjecting the resulting ferromagnetic particles to magnetic orientation.

8. A process for producing a bonded magnet, comprising the steps of:
obtaining ferromagnetic particles by the process as claimed in any one of claims 1 to 6;
dispersing the resulting ferromagnetic particles in a binder resin to obtain a mixture; and
molding the resulting mixture.

9. A process for producing a compacted magnet, comprising the steps of:
obtaining ferromagnetic particles by the process as claimed in any one of claims 1 to 6; and
compressing-molding the resulting ferromagnetic particles in a magnetic field.
